# EUROPEAN PATENT SPECIFICATION

(11) **EP 1 608 286 B1**
(45) Date of publication and mention of the grant of the patent: **06.06.2018**
(21) Application number: 04723173.3
(22) Date of filing: 25.03.2004
(51) Int. Cl.: A61C 13/00

(54) **PROCESSING OF SHAPE DATA OF A DENTAL PROSTHESIS**
VERARBEITUNG VON FORMDATEN EINER ZAHNPROTHESE
TRAITEMENT DE DONNEES DE FORME D'UNE PROTHESE DENTAIRE

(30) Priority: 26.03.2003 DE 10313690
(43) Date of publication of application: 28.12.2005
(73) Proprietor: 3M Deutschland GmbH, 41453 Neuss (DE)
(72) Inventor: KRAEMER, Michael, 86899 Landsberg (DE); BURGER, Bernd, 82239 Alling (DE); HAUPTMANN, Holger, 82404 Sindelsdorf (DE); HERTLEIN, Guenter, 82229 Seefeld (DE); HOESCHELER, Stefan, 82211 Herrsching (DE); SALEX, Markus, 82152 Martinsried (DE)
(74) Representative: Vossius & Partner Patentanwälte Rechtsanwälte mbB
(86) International application number: PCT/EP2004/003169
(87) International publication number: WO 2004/084756

(56) References cited:
- BE-A- 1 011 205
- US-A- 5 131 844
- VAQUER C ET AL INSTITUTE OF ELECTRICAL AND ELECTRONICS ENGINEERS: "MECHANICAL BEHAVIOUR AND OPTIMIZATION OF REMOVABLE PARTIAL DENTURESBY THE FINITE ELEMENT METHOD" 29 October 1992 (1992-10-29), PROCEEDINGS OF THE ANNUAL INTERNATIONAL CONFERENCE OF THE ENGINEERING IN MEDICINE AND BIOLOGY SOCIETY. PARIS, OCT. 29 - NOV. 1, 1992, NEW YORK, IEEE, US, PAGE(S) 943-944 , XP000480695
- DATABASE COMPENDEX [Online] ENGINEERING INFORMATION, INC., NEW YORK, NY, US; 1997, HANSSON S: "Fixed partial bridge in the lower jaw supported by one implant and one tooth" XP002289990 Database accession no. EIX97303674750 & DOKTORSAVH CHALMERS TEK HOGSK; DOKTORSAVHANDLINGAR VID CHALMERS TEKNISKA HOGSKOLA 1997 CHALMERS TEKNISKA HOGSKOLA, GOTEBORG, SWEDEN, no. 1279, 1997,

## Description

### BACKGROUND OF THE INVENTION

### Technical Field

The present invention relates to the production of dental replacement, more precisely to the processing of data about the three-dimensional shape of a dental prosthesis, which has two prosthesis sections and a connector section, said connector section being connected to the two prosthesis sections and less stable than the two prosthesis sections.

The term "dental prosthesis" is to be understood here in the broadest sense and is intended to include all types of dental replacement like, for example, bridges, implants, and dental prostheses in the narrower sense, but also parts of such dental prostheses like, for example, bridge substructures or copings onto which a veneering must still be applied in order to obtain the finished bridge.

The quantity indications used here like, for example, "two prosthesis sections" or "a connector section", are in general to be understood as a minimum with the meaning of "at least two" or "at least one", in case a limitation is not expressed by wording like "exactly" or "consists of".

The present invention thus includes, for example, not only two-unit bridge copings where the two units are connected by one connector, but also three- and multi-unit bridge copings, where each two neighboring units are connected by one connector. The units may be, as needed, anchors, intermediate units also called pontics, or cantilever units: an anchor is fastened like a crown, on a tooth stump serving as a bridge abutment, an intermediate unit or pontic is fastened between two units and not to a bridge abutment, and a cantilever unit is fastened only to one unit and not to a bridge abutment.

With a one-piece bridge, thus a bridge which consists of one single piece and has no coping, neighboring bridge units border directly against one another, thus without a connector lying in between. In this case, the transition area from one unit to the other represents the connector section of the present invention, said transition area having a more or less prominent restriction or flattening due to the shape of the units which is supposed to come as close as possible to the natural appearance of the missing teeth.

### Description of the Related Art

It is known that the processing of data about the three-dimensional shape of a bridge coping may be done by means of a CAD (= computer-aided design) system which is part of a CIM (= computer-integrated manufacturing) system which is made available by 3M ESPE AG (Seefeld, Germany) under the name LAVA, for the production of ceramic bridge copings. With this known LAVA system, the CAD system is on the one hand connected to an optical scanner and on the other hand to a NC-milling machine. The scanner captures the three-dimensional surface of a dentition impression and passes on the captured data to the CAD system. With the CAD system, the user can modify these surface data as desired, so as to draw up the three-dimensional shape of the bridge coping, and then send the corresponding shape data to the NC-milling machine. Finally, the NC-milling machine processes a zirconium oxide or zirconia ceramic blank in an as precise as possible agreement with the shape data. Since a dental technician must first still provide the finished, milled bridge coping with a veneer in order to give the bridge the desired natural appearance, he wishes for a connector as thin as possible because it is in his way during the application of the veneer in the contact region between two neighboring bridge units. This is especially important for the anterior teeth, as these are considerably thinner than the posterior teeth and there is thus less space available for the veneer.

But with the known method of production, the user must very carefully see to not design the connector too thin, so that they are sufficiently stable for withstanding the in part strong loadings during the milling, but also later when chewing. For this he needs a lot of experience. Since the ceramic used for the blanks is a young dental material, which is currently expensive if compared to the metal alloys used for a long time, many dental technicians are lacking the necessary experience and a costly training is needed.

### SUMMARY OF THE INVENTION

In a first aspect, the present invention relates to a process for the processing of data regarding the three-dimensional shape of a dental prosthesis as defined in claim 1. The present invention is described in the following using an example of a bridge coping of zirconia ceramic, without the intention of being restricted to this one particular prosthesis.

The determination of the stability parameters and stability criteria may be done by the user himself, for example, in that he defines for example that with a three-unit bridge coping for the posterior teeth, of which the configuration provides for two anchors and one pontic and which has two connectors in the form of circular cylinders, the two connectors should have a circular cross-sectional area of at least 9 mm² in order to achieve the desired stability. Thus, the stability parameter is the "circular cross-sectional area" and the stability criterion is the condition "circular cross-sectional area of at least 9 mm²". But the determination of stability parameters and stability criteria may also be made it easier for the user in that he chooses the desired bridge coping from a product catalog and then automatically receives a proposal for stability parameters and stability criteria.

This three-unit bridge coping is an example for the above mentioned dental prosthesis, its anchors and pontic are examples for the above mentioned prosthesis sections, and its connectors are examples for the above mentioned connector section.

The configuration of the prosthesis describes, for example, whether one deals with a two or three-unit, single or two-span bridge coping with or without cantilever unit. With a four-unit, single-span bridge without cantilever unit, two pontics are connected to one another and to the two anchors lying on the outer ends, by way of three connectors, so that the central connector lying between the two pontics is exposed to the largest loading. It is thus most often sufficient to monitor its stability.

The profile of the cross-section of a connector may also deviate from the circular shape, and with a bridge coping for anterior teeth, for example, it may be stretched upwards and/or downwards, that means flattened in the front and/or back. Against loadings from above and below, such a profile offers a better resistance than a circular profile of equal size.
The computation of the actual values of the cross-sectional areas from the shape data of the current bridge coping may be done, for example, automatically by means of a computer which displays the result on a screen.
The subsequent verification as to whether these actual values are each larger or equal to 9 mm², may also be done, for example, automatically by means of the computer, which displays the result on the screen. As the warning signal, a symbol may be shown on the screen, which is, for example, a red rectangle on a menu bar. Also possible is for the connector with a cross-section smaller than 9 mm² to be displayed on the screen in a different color.
Further characteristics and embodiments of the invention are described in the subclaims. According to the invention, the stability criterion includes a limit with which the actual value is compared. The limit may be an upper limit or a lower limit, but a limiting range defined by two limits may also be provided. In one embodiment according to the invention, that the minimal cross-sectional area of the connector section is one stability parameter and the stability criterion comprises a lower limit for it. With a connector in the form of a cylinder, the cross-sectional area is naturally constant over its length, however, with a connector with varying cross-sectional areas of the same profile, that specific location is the least stable where the cross-sectional area is minimal. In another embodiment according to the invention, the length of the connector section is one stability parameter and the stability criterion comprises an upper limit for it.

Due to the irregular shape of the units, the length of the connector is dependent on its location and orientation with respect to the units. Further, the stability of the connector decreases with increasing length. In another embodiment according to the invention, the minimal sectional modulus of the connector section is one stability parameter and the stability criterion comprises a lower limit for it. The explanations previously made with respect to the cross-sectional area can analogously be applied to the sectional modulus.
It may be provided that the stability parameter is determined by means of the finite elements method and/or the boundary element method.
These methods are best carried out by means of a computer and achieve a very exact determination of the stability even for complex structures.
It may be provided that the calculation of the actual value is started conforming to a given specification. This specification may, for example, be specified by the user in that he enters into the computer a control command for starting the calculation.
It may be provided that the calculation of the actual value is started according to a given time plan. The time plan may, for example, provide for a specific cycle or pulse according to which the calculation is started.
It may be provided that the shape data can be changed or modified and that the calculation of the actual value is started as soon as the data have or were changed or modified. The change or modification of the data can be made, e.g., by the user by means of a CAD system, but it is also possible that the CAD system automatically verifies the stability, using the current shape data, and in the case of a negative verification result modifies the data so that the stability is increased.

It may be provided that the warning signal triggers a warning for the user and/or the step that the change or modification of the shape data which has lead to the non-fulfillment of the stability criterion, is reversed.

It may be provided that the process is performed by means of a computer program. This program runs, for example, in a CAD system.

In a second aspect, the present invention relates to a data processing device for performing the process according to the present invention, with:
- an input device for the data;
- a central unit connected to the input device, in which a program runs for the processing of the data according to the process;
- an output device for the warning signal, connected to the central unit.

This device thus represents a CAD system. The input device may, for example, be connected to the output of a scanner for the three-dimensional scanning of the surface of a dentition impression. The output device may, for example, be connected to the input of an NC-milling machine or other machine for the computer-supported processing of blanks.

It may be provided that an input device for changing or modifying the data and an output device for displaying the data are connected to the central unit. This input device may, for example, be a keyboard or a mouse. The output device may, for example, be a screen.

In a third aspect, the present invention relates to a computer program which is adapted to perform the process according to the present invention.

In a fourth aspect, the present invention relates to a computer program which, when it is run in a computer, performs the process according to the present invention.
In a fifth aspect, the present invention relates to a computer program comprising commands that perform the process according to the present invention.
In a sixth aspect, the present invention relates to a computer program which implements the process according to the present invention.
In a seventh aspect, the present invention relates to a data carrier on which a computer program according to the present invention is stored. The data carrier may be, e.g., a floppy disc, a magnetic tape, a CD, a DVD, a memory stick, a hard disc, a RAM, or a ROM.
The present invention has now been described with reference to several embodiments thereof. It will be apparent to those skilled in the art that many changes can be made in the embodiments described without departing from the scope of the present invention. Thus the scope of the present invention should not be limited to the structures described in this application, but only by structures described by the language of the claims.

## Claims

1. Process for the processing of data regarding the three- dimensional shape of dental prosthesis, which has two prosthesis sections and a connector section wherein the dental prosthesis is one of a two- unit, three- unit and multi- unit bridge or bridge substructure in which each of two neighboring units are connected by a connector, the connector corresponding to the connector section and
the units corresponding to the prosthesis sections, said connector section
being connected to the two prosthesis sections and said connector section being less stable than the two prosthesis sections, said process comprising the steps that:
- a stability parameter and a stability criterion are determined for the connector section; wherein the stability parameter is one of:
- a minimal cross- sectional area of the connector section in which case the stability criterion is a lower limit for the minimal cross- sectional area of the connector section;
- a length of the connector section in which case the stability criterion is an upper limit for the length of the connector section; and
- a minimal section modulus of the connector section in which case the stability criterion is a lower limit for the minimal section modulus of the connector section;
- for the stability parameter, the actual value is calculated from the data;
- it is checked for the connector section as to whether the actual value fulfils the stability criterion, and if not, that a warning signal is generated, wherein the determination of the stability criterion is dependent on at least one of the following prosthesis attributes:
- the configuration of the prosthesis; and/or
- the position of the prosthesis inside the mouth; and/or
- the material and/or the cross- sectional profile of the connector section; and/or
- the type of the prosthesis sections adjoining the connector section.

2. Process according to one of the preceding claims, in which the stability parameter is determined by means of the finite elements method and/or the boundary element method.

3. Process according to one of the preceding claims, in which the calculation of the actual value is started conforming to a given specification.

4. Process according to one of the preceding claims, in which the calculation of the actual value is started according to a given time plan.

5. Process according to one of the preceding claims, in which the shape data can be modified and the calculation of the actual value is started as soon as the data have or were modified.

6. Process according to one of the preceding claims, in which the warning signal triggers a warning for the user and/or the step that the change of the shape data which has lead to the non-fulfillment of the stability criterion, is reversed.

7. Process according to one of the preceding claims, which is performed by means of a computer program.

8. Data processing device for performing the process according to one of the preceding claims, with:
- an input device for the data;
- a central unit connected to the input device, in which a program runs for the processing of the data according to the process according to one of the preceding claims;
- an output device for the warning signal, connected to the central unit.

9. Data processing device according to one of the preceding claims, in which an input device for changing the data and an output device for displaying the data are connected to the central unit.

10. Computer program which is adapted to perform the process according to one of the preceding claims.

11. A data carrier on which a computer program according to claim 10 is stored.

## Patentansprüche

1. Verfahren zum Verarbeiten von Daten in Bezug auf die dreidimensionale Form einer Zahnprothese, die zwei Prothesenabschnitte und einen Verbindungsabschnitt hat, wobei die Zahnprothese eines von einer Brücke oder einem Brückenunterbau mit zwei Einheiten, drei Einheiten und mehreren Einheiten ist, wobei alle zwei benachbarten Einheiten durch ein Verbindungselement verbunden sind, wobei das Verbindungselement dem Verbindungsabschnitt entspricht und die Einheiten den Prothesenabschnitten entsprechen, wobei der Verbindungsabschnitt mit den zwei Prothesenabschnitten verbunden ist und der Verbindungsabschnitt weniger stabil als die zwei Prothesenabschnitte ist, das Verfahren umfassend die Schritte, dass:
- ein Stabilitätsparameter und ein Stabilitätskriterium für den Verbindungsabschnitt bestimmt werden; wobei der Stabilitätsparameter eines von Folgendem ist:
- eine Mindestquerschnittsfläche des Verbindungsabschnitts, wobei in diesem Fall das Stabilitätskriterium eine Untergrenze für die Mindestquerschnittsfläche des Verbindungsabschnitts ist;
- eine Länge des Verbindungsabschnitts, wobei in diesem Fall das Stabilitätskriterium eine Obergrenze für die Länge des Verbindungsabschnitts ist; und
- ein Mindestabschnittsmodul des Verbindungsabschnitts, wobei in diesem Fall das Stabilitätskriterium eine Untergrenze für den Mindestabschnittsmodul des Verbindungsabschnitts ist;
- für den Stabilitätsparameter, der Istwert ausgehend von den Daten berechnet wird;
- für den Verbindungsabschnitt geprüft wird, ob der Istwert das Stabilitätskriterium erfüllt, und wenn dies nicht der Fall ist, dass ein Warnsignal erzeugt wird, wobei die Bestimmung des Stabilitätskriteriums von mindestens einem der folgenden Protheseattribute abhängt:
- der Konfiguration der Prothese; und/oder
- der Position der Prothese im Mund; und/oder
- dem Material und/oder dem Querschnittsprofil des Verbindungsabschnitts; und/oder
- dem Typ der an den Verbindungsabschnitt angrenzenden Prothesenabschnitte.

2. Verfahren nach einem der vorstehenden Ansprüche, in dem der Stabilitätsparameter mittels der Finite-Elemente-Methode und/oder der Randelementmethode bestimmt wird.

3. Verfahren nach einem der vorstehenden Ansprüche, in dem die Berechnung des Istwerts entsprechend einer bestimmten Spezifikation gestartet wird.

4. Verfahren nach einem der vorstehenden Ansprüche, in dem die Berechnung des Istwerts gemäß einem bestimmten Zeitplan gestartet wird.

5. Verfahren nach einem der vorstehenden Ansprüche, in dem die Formdaten modifiziert werden können und die Berechnung des Istwerts gestartet wird, sobald die Daten modifiziert wurden oder sich geändert haben.

6. Verfahren nach einem der vorstehenden Ansprüche, in dem das Warnsignal eine Warnung für den Benutzer und/oder den Schritt auslöst, dass die Änderung der Formdaten, die zur Nichterfüllung des Stabilitätskriteriums geführt hat, rückgängig gemacht wird.

7. Verfahren nach einem der vorstehenden Ansprüche, das mittels eines Computerprogramms durchgeführt wird.

8. Datenverarbeitungsvorrichtung zum Durchführen des Verfahrens nach einem der vorstehenden Ansprüche mit:
- einer Eingabevorrichtung für die Daten;
- einer mit der Eingabevorrichtung verbundenen Zentraleinheit, in der ein Programm zum Verarbeiten der Daten gemäß dem Verfahren nach einem der vorstehenden Ansprüche ausgeführt wird;
- einer Ausgabevorrichtung für das Warnsignal, die mit der Zentraleinheit verbunden ist.

9. Datenverarbeitungsvorrichtung nach einem der vorstehenden Ansprüche, in der eine Eingabevorrichtung zum Ändern der Daten und eine Ausgabevorrichtung zum Anzeigen der Daten mit der Zentraleinheit verbunden sind.

10. Computerprogramm, das dafür konzipiert ist, das Verfahren nach einem der vorstehenden Ansprüche durchzuführen.

11. Datenträger, auf dem ein Computerprogramm nach Anspruch 10 gespeichert ist.

## Revendications

1. Processus de traitement de données concernant la forme tridimensionnelle d'une prothèse dentaire, qui a deux sections de prothèse et une section de connecteur, dans lequel la prothèse dentaire est l'un parmi un bridge ou une sous-structure de bridge à deux unités, à trois unités et à plusieurs unités dans lequel chacune de deux unités voisines est reliée par un connecteur, le connecteur correspondant à la section de connecteur et les unités correspondant aux sections de prothèse, ladite section de connecteur étant reliée aux deux sections de prothèse et ladite section de connecteur étant moins stable que les deux sections de prothèse, ledit procédé comprenant les étapes selon lesquelles :
- un paramètre de stabilité et un critère de stabilité sont déterminés pour la section de connecteur ; dans lequel le paramètre de stabilité est l'un parmi :
- une aire en coupe transversale minimale de la section de connecteur auquel cas le critère de stabilité est une limite inférieure pour l'aire en coupe transversale minimale de la section de connecteur ;
- une longueur de la section de connecteur auquel cas le critère de stabilité est une limite supérieure pour la longueur de la section de connecteur ; et
- un module de section minimal de la section de connecteur auquel cas le critère de stabilité est une limite inférieure pour le module de section minimal de la section de connecteur ;
- pour le paramètre de stabilité, la valeur réelle est calculée à partir des données ;
- on vérifie pour la section de connecteur si la valeur réelle satisfait au critère de stabilité et, dans la négative, qu'un signal d'avertissement soit généré, dans lequel la détermination du critère de stabilité dépend d'au moins l'un des attributs de prothèse suivants :
- la configuration de la prothèse ; et/ou
- la position de la prothèse à l'intérieur de la bouche ; et/ou
- le matériau et/ou le profil en coupe transversale de la section de connecteur ; et/ou
- le type des sections de prothèse attenantes à la section de connecteur.

2. Processus selon l'une des revendications précédentes, dans lequel le paramètre de stabilité est déterminé au moyen du procédé par éléments finis et/ou du procédé par éléments de contour.

3. Processus selon l'une des revendications précédentes, dans lequel le calcul de la valeur réelle est démarré en se conformant à une spécification donnée.

4. Processus selon l'une des revendications précédentes, dans lequel le calcul de la valeur réelle est démarré selon une planification donnée.

5. Processus selon l'une des revendications précédentes, dans lequel les données de forme peuvent être modifiées et le calcul de la valeur réelle est démarré dès que les données se sont ou ont été modifiées.

6. Processus selon l'une des revendications précédentes, dans lequel le signal d'avertissement déclenche un avertissement pour l'utilisateur et/ou l'étape selon laquelle le changement des données de forme qui a entraîné un non-respect du critère de stabilité, est inversée.

7. Processus selon l'une des revendications précédentes, qui est exécuté au moyen d'un programme d'ordinateur.

8. Dispositif de traitement de données pour l'exécution du processus selon l'une des revendications précédentes, avec :
- un dispositif d'entrée pour les données ;
- une unité centrale connectée au dispositif d'entrée, dans laquelle un programme s'exécute pour le traitement des données conformément au processus selon l'une des revendications précédentes ;
- un dispositif de sortie pour le signal d'avertissement, connecté à l'unité centrale.

9. Dispositif de traitement de données selon l'une des revendications précédentes, dans lequel un dispositif d'entrée pour changer les données et un dispositif de sortie pour afficher les données sont connectés à l'unité centrale.

10. Programme d'ordinateur qui est conçu pour exécuter le processus selon l'une des revendications précédentes.

11. Support de données sur lequel un programme d'ordinateur selon la revendication 10 est stocké.
